(19) Europäisches Patentamt
European Patent Office
Office européen des brevets

(11) EP 2 340 267 B1

(12) **FASCICULE DE BREVET EUROPEEN**

(45) Date de publication et mention de la délivrance du brevet:
**03.12.2014 Bulletin 2014/49**

(21) Numéro de dépôt: **09760216.3**

(22) Date de dépôt: **27.10.2009**

(51) Int Cl.:
***C08F 297/08*** (2006.01) ***C08F 210/02*** (2006.01)
***C08F 4/80*** (2006.01)

(86) Numéro de dépôt international:
**PCT/FR2009/052058**

(87) Numéro de publication internationale:
**WO 2010/049633 (06.05.2010 Gazette 2010/18)**

(54) **NOUVEAUX COPOLYMÈRES À BLOCS D'OLÉFINES POLAIRES ET APOLAIRES**

NEUE COPOLYMERE MIT POLAREN UND NICHTPOLAREN OLEFINBLÖCKEN

NOVEL COPOLYMERS WITH POLAR AND NON-POLAR OLEFIN BLOCKS

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **27.10.2008 FR 0857293**

(43) Date de publication de la demande:
**06.07.2011 Bulletin 2011/27**

(73) Titulaires:
- **ARKEMA FRANCE**
  **92700 Colombes (FR)**
- **Centre National de la Recherche Scientifique**
  **75016 Paris (FR)**
- **Ecole Superieure De Chimie Physique Electronique De Lyon**
  **69616 Villeurbanne Cedex (FR)**

(72) Inventeurs:
- **NAVARRO, Christophe**
  **F-64990 Lahonce (FR)**
- **LEBLANC, Alexandra**
  **F-69340 Francheville (FR)**
- **MONTEIL, Vincent**
  **F-69003 Lyon (FR)**
- **SPITZ, Roger**
  **F-69006 Lyon (FR)**
- **BOISSON, Christophe**
  **F-01390 Tramoyes (FR)**
- **BROYER, Jean-Pierre**
  **F-69500 Bron (FR)**

(74) Mandataire: **Lhoste, Catherine**
**ARKEMA FRANCE**
**Département Propriété Industrielle**
**420 Rue d'Estienne d'Orves**
**92705 Colombes Cedex (FR)**

(56) Documents cités:
**WO-A-00/56785** **WO-A-2004/078337**
**US-A1- 2006 270 811**

- **GIBSON, VERNON C. ET AL: "Functionalized polyolefin synthesis using [P,O]Ni catalysts" CHEMICAL COMMUNICATIONS (CAMBRIDGE, UNITED KINGDOM) , (19), 1964-1965 CODEN: CHCOFS; ISSN: 1359-7345, 2001, XP002529813**
- **KLABUNDE U ET AL: "NICKEL CATALYSIS FOR ETHYLENE HOMO- AND CO-POLYMERIZATION" JOURNAL OF MOLECULAR CATALYSIS, LAUSANNE, CH, vol. 41, no. 1/02, 2 juillet 1987 (1987-07-02), pages 123-134, XP008002524**
- **K.M.SKUPOV ET AL: "Palladium Aryl Sulfonate Phosphine Catalysts for the Copolymerization of Acrylates with Ethene" MACROMOL. RAPID COMMUN., vol. 28, 2007, pages 2033-2038, XP002529814 cité dans la demande**
- **HAJIME YASUDA ET AL: "NEW APPROACH TO BLOCK COPOLYMERIZATIONS OF ETHYLENE WITH ALKYL METHACRYLATES AND LACTONES BY UNIQUE CATALYSIS WITH ORGANOLANTHANIDE COMPLEXES" MACROMOLECULES, ACS, WASHINGTON, DC, US, vol. 25, no. 19, 14 septembre 1992 (1992-09-14), pages 5115-5116, XP000298710 ISSN: 0024-9297**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

• MATSUGI, TOMOAKI ET AL: "Synthesis and morphology of polyethylene-block-poly(methyl methacrylate) through the combination of metallocene catalysis with living radical polymerization" JOURNAL OF POLYMER SCIENCE, PART A: POLYMER CHEMISTRY , 41 (24), 3965-3973 CODEN: JPACEC; ISSN: 0887-624X, 2003, XP002529815

## Description

La présente invention concerne des copolymères à blocs d'oléfines polaires et apolaires à teneur en monomère polaire modulable de 0,1% à 99,9% molaire. L'invention concerne également un procédé permettant d'obtenir des copolymères à blocs d'oléfines et de monomères polaires vinyliques, ledit procédé utilisant un système catalytique monocomposant formé d'un complexe organométallique à base d'un métal des groupes VIII à X.

L'apport de fonctionnalités au sein de chaînes apolaires (comme les polyoléfines) permettrait de modifier grandement les propriétés des polymères en terme de dureté, d'adhésion, de propriétés barrières et de surface (coloration) mais aussi en terme de rhéologie ou de miscibilité avec les autres polymères, tout en conservant les propriétés mécaniques associées aux polyoléfines. A l'opposé, l'apport d'unités oléfines apolaires au sein de chaînes de polymères polaires (polymères (méth)acryliques notamment) permettrait d'améliorer leurs propriétés mécaniques, de flexibilité et de résistance aux produits chimiques. Ainsi la synthèse de polyoléfines fonctionnelles présente un grand intérêt.

Cependant, l'efficacité de la copolymérisation des oléfines polaires et apolaires est limitée par la différence de réactivité des comonomères : les oléfines apolaires sont généralement polymérisées par catalyse, tandis que les monomères polaires le sont par polymérisation radicalaire ou ionique. Afin d'introduire des fonctionnalités sur les polyoléfines, deux stratégies (catalytique ou radicalaire) ont donc été envisagées.

Des procédés catalytiques de polymérisation et de copolymérisation d'oléfines polaires et apolaires ont été largement décrits. Certains rapportent l'utilisation de catalyseurs organométalliques de métaux du groupe IV (Ti, Zr...). Malheureusement, ces systèmes très oxophiles sont rapidement empoisonnés par la fonction des monomères polaires. Pour remédier à cet empoisonnement, certains ont choisi d'ajouter un cocatalyseur (type alkylaluminium) à leur système (Marques M.M. et al, Journal of Polymer Science: Part A: Polymer Chemistry, Vol. 37, 2457-2469, 1999; (Aaltonen P. et al, Macromolecules 1996, 29, 5255-5260), dans le but de protéger chimiquement la fonction polaire. Ces systèmes sont alors capables de copolymériser l'éthylène et des monomères type hydroxyl- ou carboxy- alpha-oléfines (ex: 10-undecen-1-ol). Les copolymères obtenus contiennent au maximum 10% molaire du monomère polaire. Dans ce cas, l'inconvénient majeur du système est la nécessité d'ajouter un cocatalyseur pour protéger la fonction polaire de l'oléfine polaire, ce qui rend le système obsolète puisque le cocatalyseur doit être utilisé en stoechiométrie avec le monomère polaire.

La même remarque peut être adressée à l'égard de certains systèmes à base de nickel (Carlini C. et al, Macromol. Chem. Phys. 2002, 203, 1606-1613). L'ajout de méthylaluminoxane (MAO) au système comme cocatalyseur agit aussi comme protection de la fonction polaire. Ces systèmes permettent alors de copolymériser l'éthylène et le méthacrylate de méthyle (MMA) avec des taux d'insertion du MMA variant de 3% à 80% molaire. Cependant, les copolymères obtenus présentent soit une incorporation très majoritaire de méthacrylate de méthyle (comprise entre 61 et 82 % molaire) mais avec des masses molaires faibles (inférieures à 30 000 g/mol) et un indice de polymolécularité élevé (supérieur à 30) avec un complexe de Ni(II) ; soit une très faible incorporation de méthacrylate de méthyle (comprise entre 3 et 7% molaire) pour des copolymères de masses molaires élevées (comprises entre 49 000 et 290 000 g/mol ) avec un complexe de Ni(0).

D'autres systèmes à base de cuivre (US 6.417.303, US 6.479.425, Pracella M. et al, Journal of Polymer Science: Part A: Polymer Chemistry, Vol. 45, 1134-1142, 2007**)** permettent aussi de synthétiser des copolymères éthylène/acrylate ou éthylène/méthacrylate mais nécessitent l'utilisation d'un cocatalyseur type alkylaluminium (MAO).

D'autres équipes ont rapporté l'utilisation de catalyseurs organométalliques de métaux moins oxophiles du groupe X (Ni, Pd), sans protection de la fonction polaire par un alkyaluminium (Mecking S, Coordination Chemistry Reviews 2000, 203, 325-35 ; Johnson L.K et al, Chemical Reviews 2000, 100, 1169-1203 ; Boffa L.S. et Novak B.M., Chem. Rev. 2000, 100, 1479-1493). Ces systèmes à base de nickel et de palladium (décrits également dans les documents suivants: WO0192348, WO0192354, WO02059165, WO9623010, WO9842664, WO2004101634, US6777510) sont limités à des incorporations de monomère polaire de maximum 15% molaire car ils conduisent à des copolymères dont la partie polyéthylène est riche en ramifications (environ 100 ramifications pour 1000 C) et dont la fonction polaire est toujours insérée en bout de ramifications du polymère. Ces systèmes peuvent être utilisés sans cocatalyseur mais ne permettent de copolymériser qu'un nombre restreint de monomères polaires tels des acrylates ou des norbornènes fonctionnalisés.

D'autres systèmes à base de palladium ont été décrits (WO0192342, Liu S. et al, Organometallics 2007, 26, 210-216, Skupov K.M. et al, Macromol. Rapid Commun. 2007, 28, 2033-2038), qui incorporent le monomère polaire dans le squelette de la chaîne polymère pour donner des copolymères éthylène/alkyl acrylate contenant jusqu'à 17% molaire d'alkyl acrylate, en unités isolées dans la chaîne de copolymère. L'inconvénient de ces systèmes est qu'ils conduisent à des polymères de faibles masses moléculaires (inférieures à $10^4$ g/mol, ou même à $10^3$ g/mol dés lors qu'une proportion notable en monomère polaire (au moins 10 %) est intégrée dans le copolymère).

L'utilisation de ces systèmes catalytiques connus ne permet pas d'obtenir de copolymères présentant des enchaînements sous formes de blocs d'oléfines polaires et d'oléfines apolaires, avec des proportions équilibrées de chaque constituant au sein du copolymère, pour des masses moléculaires supérieures à 10000 Da.

La deuxième stratégie utilisée pour la copolymérisation d'oléfines polaires et apolaires met en oeuvre la chimie radicalaire. Ce sont pour la plupart des procédés industriels qui permettent d'obtenir par exemple des copolymères d'éthylène et d'acétate de vinyle (éthylène vinyle acétate ou EVA, copolymère d'acétate de vinyle/éthylène ou VAE). Cependant, ces procédés ne permettent pas d'obtenir de microstucture contrôlée des polymères ; dans les polymères obtenus par polymérisation radicalaire, les comonomères sont distribués aléatoirement dans la chaîne polymère qui présente des ramifications ; les conditions de polymérisation sont contraignantes, en terme de température (pouvant aller jusqu'à 350°) et de pression (jusqu'à 3000 bars).

D'autres systèmes radicalaires connus permettent de copolymériser des oléfines polaires et apolaires dans des conditions plus douces. Des copolymères MMA/éthylène et MMA/1-hexène sont obtenus à partir de l'initiateur radicalaire AIBN en présence des comonomères (Nagel M. et al, Macromolecules 2005, 38, 7262-7265 ; Liu S.S. et Sen A.M., Journal of Polymer Science: Part A: Polymer Chemistry, Vol. 42, 6175-6192 2004**)**. Des copolymères MMA/1-octène et acrylate de méthyle (MA)/1-octène ont été obtenus en présence d'un système au cuivre de type « atom transfer radical polymerization » ATRP (Venkatesh R. et Klumpermann B., Macromolecules 2004, 37, 1226-1233). Des copolymères MA/hexène et MA/norbornène ont été obtenus par polymérisation radicalaire à partir d'un complexe de palladium (Tian G. et al, Macromolecules 2001, 34, 7656-7663).

L'inconvénient majeur de ces systèmes vient du fait qu'aucun enchaînement d'oléfines apolaires sous forme de bloc n'a été observé. Seules des unités isolées d'oléfines apolaires dans une chaîne d'oléfine polaire sont observées dans le copolymère.

Force est de constater qu'aucun système connu ne permet de copolymériser convenablement les oléfines apolaires et polaires. La catalyse permet d'accéder à des polyoléfines contenant un taux limité de monomère polaire, tandis que la polymérisation radicalaire permet d'obtenir des polymères polaires contenant un taux limité d'oléfine.

La présente invention se propose de remédier aux inconvénients précités des techniques de copolymérisation de monomères polaires et apolaires.

L'objet de la présente invention est de fournir un procédé de copolymérisation de monomères polaires et de monomères apolaires en présence d'un système catalytique monocomposant donné, conduisant à l'obtention de copolymères à blocs contenant à la fois un ou plusieurs blocs de monomère polaire et un ou plusieurs blocs de monomère apolaire, notamment d'éthylène.

Selon un premier objet, l'invention se rapporte à un procédé de préparation de copolymères à blocs à partir d'au moins un monomère apolaire notamment l'éthylène et d'au moins un monomère polaire. Avantageusement, la copolymérisation a lieu en présence d'un système catalytique formé d'un complexe organométallique de formule :

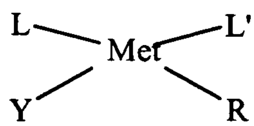

où :

- Met représente un métal appartenant aux groupes VIII, IX et X,
- Y représente une molécule de ligand oxydant le métal et formée de groupements hétéroatomiques à base de C, H et au moins un atome sélectionné parmi : O, S, P, N, et de préférence de type phénoxy,
- L représente une molécule complexante formée de groupements hétéroatomiques à base de C, H et au moins un atome sélectionné parmi : O, S, P, N, et de préférence de type imine ou ylure,
- L' représente une molécule complexante électrodonneuse et monodentate, telle qu'une phosphine, de la pyridine, préférentiellement une phosphine, et encore plus préférentiellement de la triphénylphosphine,
- R est un groupement hydrocarboné de type alkyle ou alkylaryle ayant de 1 à 20 atomes de C, ou de type cycloalkyle ou phényle ayant de 6 à 20 atomes de C, préférentiellement un groupement méthyle ou phényle, le dit procédé conduisant à la formation d'un copolymère à blocs qui satisfait les relations énoncées dans la revendication 1 sans ajout de cocatalyseur.

Selon un deuxième objet, l'invention concerne des copolymères à blocs d'oléfines polaires et apolaires contenant à la fois des enchaînements (blocs) d'oléfines polaires et des enchaînements (blocs) d'oléfines apolaires, lesdits copolymères à blocs étant obtenus par le procédé précité.

Selon un troisième objet, l'invention se rapporte à l'utilisation d'un système catalytique formé d'un complexe organométallique de formule :

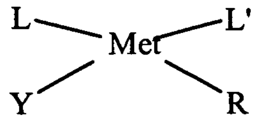

(où Met, R, L, L' et Y ont la même signification que plus haut) pour la copolymérisation à blocs d'au moins un monomère apolaire notamment l'éthylène et d'au moins un monomère polaire sans ajout de cocatalyseur.

D'autres caractéristiques et avantages ressortiront de la description détaillée du procédé de copolymérisation selon l'invention qui va suivre et des exemples de réalisation de l'invention.

Afin de résoudre le problème de la copolymérisation des oléfines apolaires et polaires, la présente invention met en place un système catalytique neutre monocomposant à base de métaux des groupes VIII à X, utilisé dans des conditions de température et de pression douces permettant la synthèse de copolymères multiblocs d'oléfines et de monomères polaires, sans contrôle de la longueur des différents blocs d'oléfines polaires et apolaires.

Par « oléfine » on entend un hydrocarbure insaturé qui comprend au moins une double liaison covalente terminale entre deux atomes de carbone. Les oléfines sont des composés apolaires. Les oléfines mises en oeuvre dans le cadre de l'invention sont l'éthylène, le propylène, les $\alpha$-oléfines supérieures, le norbornène et ses dérivés, les dérivés styrèniques dans le cas où le comonomère associé n'est pas l'éthylène, le propylène ou une $\alpha$-oléfine.

Par « oléfine polaire » on entend une oléfine fonctionnalisée au moyen d'au moins un groupe polaire ; dans le cadre de l'invention, les oléfines polaires (ou monomères polaires) sont choisies parmi :

- les acides carboxyliques insaturés tels que l'acide acrylique, l'acide méthacrylique et leurs dérivés,
- les esters d'acides carboxyliques insaturés tels que l'acrylate de butyle et le méthacrylate de méthyle et leur dérivés,
- les dérivés styréniques tels que le styrène ou l'$\alpha$-méthylstyrène considérés comme monomère polaire lorsqu'associés à une $\alpha$ - oléfine, l'éthylène ou le propylène,
- les acrylamides et méthacrylamides tels que l'acrylamide, le méthacrylamide et leur dérivés,
- l'acrylonitrile et ses dérivés.

Selon un premier objet, l'invention se rapporte à un procédé de préparation de copolymères à blocs à partir d'au moins un monomère apolaire notamment l'éthylène et d'au moins un monomère polaire, la copolymérisation étant effectuée en présence d'un système catalytique formé d'un complexe organométallique de formule :

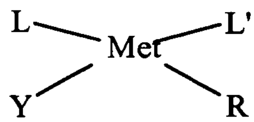

où:

- Met représente un métal appartenant aux groupes VIII, IX et X,
- Y représente une molécule de ligand oxydant le métal et formée de groupements hétéroatomiques à base de C, H et au moins un atome sélectionné parmi : O, S, P, N, et de préférence de type phénoxy,
- L représente une molécule complexante formée de groupements hétéroatomiques à base de C, H et au moins un atome sélectionné parmi : O, S, P, N, et de préférence de type imine ou ylure,
- Y et L peuvent être reliés par une liaison covalente,
- L' représente une molécule complexante électrodonneuse et monodentate, telle qu'une phosphine, de la pyridine, préférentiellement une phosphine, et encore plus préférentiellement de la triphénylphosphine,
- R est un groupement hydrocarboné de type alkyle ou alkylaryle ayant de 1 à 20 atomes de C, ou de type cycloalkyle ou phényle ayant de 6 à 20 atomes de C, préférentiellement un groupement méthyle ou phényle, sans ajout de cocatalyseur,

ledit procédé conduisant à la formation d'un copolymère à blocs comprenant un ou plusieurs blocs de monomère polaire et un ou plusieurs blocs de monomère apolaire, qui satisfait les relations énoncées dans la revendication 1.

Le monomère polaire est sélectionné dans le groupe : acrylate de méthyle, méthacrylate de méthyle, acrylate de butyle, méthacrylate de butyle, styrène.

De préférence, le métal est choisi dans le groupe : fer, cobalt, nickel, palladium et platine. Dans un mode de réalisation particulièrement préféré, ledit métal est le nickel, et le complexe organométallique aura une des structures suivantes :

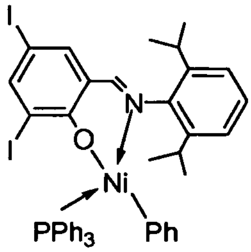

ou

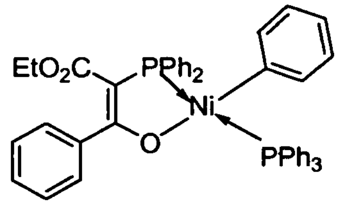

Complexe salicylaldimine    Complexe phosphino-énolate

Le procédé de préparation selon l'invention d'un copolymère d'au moins une oléfine polaire et d'au moins une oléfine apolaire comprend la réaction du complexe organométallique tel que défini précédemment dans un solvant défini comme suit :

- un solvant hydrocarboné inerte pour les polymérisations en solution,
- le ou les monomères polaires liquides pour les polymérisations en masse,

en présence desdites oléfines apolaires (liquides ou gazeuses) et polaires (liquides).
La polymérisation est effectuée entre -100°C et 250°C, préférentiellement entre 20°C et 250°C et sous une pression comprise entre la pression atmosphérique et 300 bar.
L'insertion du monomère polaire lors de la copolymérisation éthylène/monomère polaire est favorisée par :

- l'augmentation de la température de polymérisation,
- l'ajout de base de Lewis au système, par exemple la triphénylphosphine $PPh_3$, ajoutée à x équivalents (x compris entre 1 et 20 équivalents par rapport au métal),
- la diminution de la pression d'éthylène (et donc de la concentration d'éthylène dans le milieu).

Selon un deuxième objet, l'invention concerne des copolymères à blocs d'oléfines polaires et apolaires contenant à la fois des enchaînements (blocs) d'oléfines polaires et des enchaînements (blocs) d'oléfines apolaires, lesdits copolymères à blocs étant obtenus par le procédé précité.
Lesdits copolymères présentent des masses moléculaires en nombre comprises de $10^3$ à $10^6$ g/mol, et comprenant des unités enchaînées (blocs) de chacun des dits comonomères. Les taux molaires de chacun des comonomères peuvent varier de 0,1% à 99,9%. La partie du copolymère contenant les enchaînements d'unités d'au moins une oléfine apolaire peut être linéaire ou porteuse de ramifications contenant de 1 à 20 C. L'indice de polymolécularité Ip du copolymère à blocs obtenu par le procédé selon l'invention varie de 1 à 6.
Si l'on définit :

- « p-a » comme une liaison entre un monomère polaire (p) et un monomère apolaire (a),
- « p-p » comme une liaison entre un monomère polaire (p) et un monomère polaire (p),
- « a-a » comme une liaison entre un monomère apolaire (oléfine) (a) et un monomère apolaire (oléfine) (a),

on peut établir que les copolymères à blocs selon l'invention obtenus présentent des structures satisfaisant aux relations suivantes :

$$\Sigma p\text{-}a/\Sigma p\text{-}p \ll 1$$

$$\Sigma p\text{-}a/\Sigma a\text{-}a \ll 1$$

$\sum p\text{-}a > 1$ dans chaque chaîne de polymère.
Ces relations indiquent :

- d'une part, que le rapport entre la somme des liaisons de type « p-a » et la somme des liaisons de type « p-p » est

largement inférieur à 1,

- d'autre part, que le rapport entre la somme des liaisons de type « p-a » et la somme des liaisons de type « a-a » est largement inférieur à 1,
- alors que, dans chaque chaîne de polymère, la somme des liaisons de type « p-a » est supérieure à 1.

Selon un troisième objet, l'invention se rapporte à l'utilisation d'un système catalytique formé d'un complexe organométallique de formule :

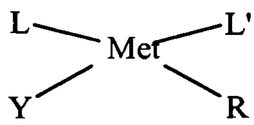

(où Met, R, L, L' et Y ont la même signification que plus haut) pour la copolymérisation à blocs d'au moins un monomère apolaire notamment l'éthylène et d'au moins un monomère polaire. Ce complexe est utilisable pour l'obtention d'un copolymère à blocs d'au moins une oléfine apolaire et d'au moins une oléfine polaire. On notera que de manière avantageuse ledit complexe organométallique est actif dans le milieu sans ajout de cocatalyseur.

Le système monocomposant utilisé est capable de polymériser l'éthylène par voie catalytique ce qui est connu. De manière surprenante et originale, le même système est capable d'homo- et de copolymériser différents monomères polaires par voie radicalaire (exemples 1 à 3). De plus, ce système est capable en présence d'éthylène et de monomères polaires de co- et terpolymériser les dits comonomères (exemples 4 à 12), conduisant ainsi à de tous nouveaux copolymères à blocs. Ces co- et terpolymères ont des compositions pouvant varier de 0,1 à 99,9% molaire en chacun des comonomères. De plus, les activités reportées dans la présente invention sont supérieures ou égales aux activités (mesurées en g de polymère/mole de métal/heure) décrites dans la littérature pour les systèmes les plus actifs.

EXEMPLES

Toutes les manipulations sont effectuées sous argon. Les solvants et monomères liquides sont distillés sur $CaH_2$.

La microstructure des homo- et des copolymères obtenus dans les exemples suivants a été déterminée par les techniques de RMN $^1H$ et de RMN $^{13}C$. On a utilisé à cet effet un spectromètre BRUKER DRX 400 à des fréquences de 400 MHz pour la technique de RMN $^1H$ et de 100,6 MHz pour la technique de RMN $^{13}C$.

Les propriétés thermiques (températures de fusion et de transition vitreuse) ont été mesurées par DSC (Differential Scanning Calorimetry) sur un appareil Setaram DSC 131. Le programme de température utilisé correspond à une montée en température de -120°C à 150°C à la vitesse de 10 °C/min.

Les masses molaires en nombre (Mn) et l'indice de polymolécularité (IP) ont été déterminées par chromatographie d'exclusion stérique en utilisant l'appareil et les conditions d'analyse décrites dans les tableaux T1 et T2 suivants, avec des standards polystyrène ou PMMA. Les masses molaires des polyéthylènes et des copolymères éthylène / monomères polaires (semi-cristallins) sont exprimées en masses vraies, en utilisant une technique de calibration universelle grâce à une double détection (réfractomètre et viscosimètre).

Pour l'analyse des polyéthylènes et des copolymères éthylène / monomères polaires (semi-cristallins), les conditions sont indiquées ci-dessous :

Tableau T1

| | |
|---|---|
| Appareil : | Waters Alliance GPCV 2000 |
| Colonnes : | 3 colonnes Waters Styragel HT6E). |
| Température : | 150°C |
| Solvant : | Trichlorobenzene |
| Vitesse d'élution : | 1 ml/min |

Les masses molaires des homopolymères polaires et des copolymères éthylène / monomères polaires amorphes sont exprimées en équivalents polystyrène (lorsque le copolymère contient du styrène) ou poly(méthacrylate de méthyle) (lorsque le copolymère contient un monomère (méth)acrylique) en utilisant une détection au réfractomètre. Pour l'analyse des homopolymères polaires et des copolymères éthylène / monomères polaires amorphes, les conditions sont indiquées ci-dessous :

Tableau T2

| | |
|---|---|
| Appareil : | |
| Colonnes : | Waters, 515 HPLC (pompe), RI 410 (détecteur) |
| | 1 x Waters Styragel HR 4E |
| Température : | + 2 x Waters Styragel HR 5E |
| Solvant : | Tcolonne = 45°C, Tdétecteur = 40°C |
| Vitesse d'élution : | THF |
| | 1 ml/min |

Dans les exemples 1 à 12, les complexes organométalliques utilisés, notés A et B, sont préparés selon les méthodes décrites dans Grubbs, Organometallics 1998 17,3149 et Matt, Chemistry--A European Journal, 12(20), 5210-5219; 2006) respectivement.

Soit A=

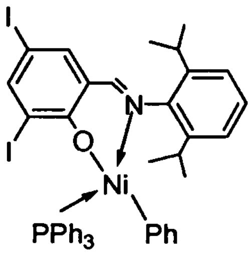

Soit B=

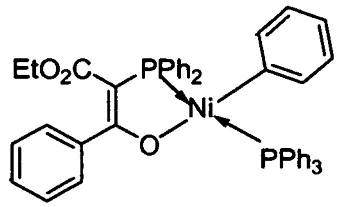

EXEMPLES 1-3

Copolymérisations de monomères polaires avec deux types de complexes de nickel

Dans les exemples 1 à 3, la copolymérisation des comonomères a été réalisée en masse dans les comonomères, dans différentes proportions desdits comonomères. Le complexe organométallique et le cas échéant la triphénylphosphine sont dissous dans lesdits comonomères. La température de polymérisation est fixée par un bain thermostaté dans lequel est plongé le ballon en verre contenant les réactifs comme définis précédemment.

Après un temps t de réaction, la polymérisation est stoppée par refroidissement puis le polymère est obtenu par précipitation dans le méthanol. Après séchage, on obtient une masse m de polymère caractéristique du rendement massique (g) de la réaction.

La valeur des rapports de réactivité de deux comonomères est une information mécanistique primordiale puisqu'elle permet d'identifier le mécanisme de polymérisation mis en oeuvre.

Afin d'accéder à ces rapports de réactivité, il faut tout d'abord mettre en place l'équation de copolymérisation. On considère les réactions de polymérisation des monomères A et B suivantes :

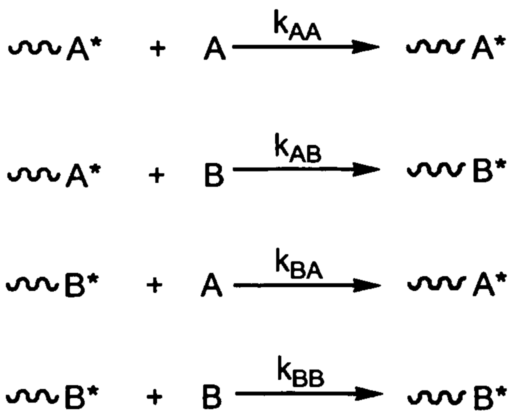

A* et B* étant les espèces actives associées aux monomères A et B respectivement. On considère la même réactivité pour toutes les espèces actives A* et B* respectivement, quelle que soit la longueur de la chaîne qui substitue l'espèce active. Chaque espèce active A* et B* peut réagir avec les deux monomères présents A et B, selon les constantes de vitesse $k_{AA}$ et $k_{BB}$ pour les homopolymérisations et $k_{AB}$ et $k_{BA}$ pour les copolymérisations.

On peut alors définir les rapports de réactivité rA et rB comme les rapports entre les constantes de vitesse des réactions d'homopolymérisation et de copolymérisation, soit :

$$rA=\frac{k_{AA}}{k_{AB}} \quad \text{et} \quad rB=\frac{k_{BB}}{k_{BA}}$$

1. <u>Complexe type A : copolymérisation styrène/acrylate de butyle (Abu)</u>

*[Ni]=2,2mM, $V_{total\ de\ monomères}$ = 10ml (polymérisation en masse dans les monomères),*
*$m_{3PPh3}$=20mg de $PPh_3$ si ajout de $PPh_3$*
*T=70°C, durée de polymérisation=3 heures*

Tableau I

| | **% poids ABu alimentation** | **% poids ABu polymère** | **Rdt g polymère** | **Mn 1er pic g/mol (Ip)** | **Mn 2nd pic g/mol (Ip)** | **rA (styrène) calculé*** | **rB (Abu) calculé*** | **$R^2$ *** |
|---|---|---|---|---|---|---|---|---|
| **Sans ajout de PPh3** | 20% | **20%** | 0,67 | **$2,4.10^5$ (1,3)** | **3,0.10" (1,6)** | | | |
| | 49% | **41%** | 0,62 | **$2,9.10^5$ (1,2)** | **$4,0.10^4$ (1,6)** | **0,82** | **0,27** | **1** |
| | 70% | **54%** | 0,6 | **$4,8.10^5$ (1,3)** | **$7,0.10^4$ (1,6)** | | | |
| **+3éq. de $PPh_3$** | 20% | **20%** | 0,83 | - | **$3,8.10^4$ (2,4)** | | | |
| | 49% | **40%** | 0,87 | - | **$4,8.10^4$ (2,3)** | **0,81** | **0,24** | **1** |
| | 70% | **54%** | 0,8 | - | **$6,9.10^4$ (1,9)** | | | |

*calculés à partir de la méthode des moindres carrés, $R^2$: coefficient de détermination.

Lorsque le complexe de nickel est mis en oeuvre seul (avec 1 $PPh_3$ donc), la copolymérisation a lieu et conduit aux mêmes copolymères (même taux d'insertion des comonomères) que lorsque le complexe de nickel est mis en oeuvre avec 3PPh3 supplémentaires. L'ajout de 3PPh3 conduit à un meilleur rendement.
Le mécanisme de copolymérisation de l'acrylate de butyle et du styrène à partir d'un catalyseur de polyoléfines est donc bien radicalaire (rA et rB en accord avec les valeurs reportées dans la littérature, rA(styrène)=0,81 et rB(Abu)=0,22 d'après le Polymer Handbook). Le calcul des rapports de réactivité permet d'accéder au diagramme de composition des copolymères (illustré dans la figure 1 annexée, avec l'exemple de la copolymérisation de styrène et d'acrylate de butyle). On voit que la courbe recalculée à partir des valeurs des rapports de réactivité est en bon accord avec les valeurs expérimentales mesurées (avec ou sans ajout de PPh3).

2. <u>Complexe type B : copolymérisation styrène/acrylate de butyle</u>

*[Ni]=2,2mM, Vtotal de monomères = 10ml,*
*$m_{3PPh3}$=20mg de $PPh_3$ si ajout de $PPh_3$*
*T=70°C, durée de polymérisation=3 heures*

Tableau II

| | %wt ABu alimentation | %wt ABu polymère | Rendement g polymérisation | Mn g/mol (Ip) | rA (styrène) calculé* | rB (Abu) calculé* | $R^2$ * |
|---|---|---|---|---|---|---|---|
| **Sans ajout de $PPh_3$** | 20% | **21%** | 0,36 | $3,1.10^5$ (2,6) | 0,73 | 0,17 | 0,999 |
| | 39% | **35%** | 0,33 | $3,3.10^5$ (3,3) | | | |
| | 59% | **44%** | 0,26 | $3,9.10^5$ (2,8) | | | |
| | 80% | **58%** | 0,22 | $3,6.10^5$ (3,1) | | | |
| **+ 3 éq. de $PPh_3$** | 20% | **18%** | 0,40 | $2,1.10^5$ (2,6) | 0,95 | 0,25 | 0,997 |
| | 39% | **33%** | 0,36 | $3,5.10^5$ (2,7) | | | |
| | 59% | **45%** | 0,32 | $3,7.10^5$ (2,5) | | | |
| | 80% | **58%** | 0,23 | $3,1.10^5$ (2,9) | | | |

*calculés à partir de la méthode des moindres carrés, $R^2$ : coefficient de détermination

Le mécanisme de copolymérisation de l'acrylate de butyle et du styrène à partir d'un catalyseur de polyoléfines est donc bien radicalaire (rA et rB en accord avec les valeurs reportées dans la littérature, rA(styrène)=0,81 et rB(Abu)=0,22 d'après le Polymer Handbook).

3. Copolymérisations d'autres monomères polaires (MMA/styrène, ABu/MMA)

Les copolymérisations ont aussi été réalisées avec deux autres couples de monomères polaires cités ci-dessus (MMA étant le méthacrylate de méthyle). Les copolymérisations ont permis d'accéder aux rapports de réactivité des couples de comonomères., en utilisant la méthode des moindres carrés.

Tableau III

| Comonomère A | Comonomère B | Complexe de Ni utilisé | rA calculé* | rB calculé* | $R^2$ * | (rA)(rB) |
|---|---|---|---|---|---|---|
| **Méthacrylate de méthyle rA=2,35**** | **Acrylate de butyle rB=0,33**** | N,O-chélaté seul | **0,74** | **0,17** | 1 | 0,13 |
| | | N,O-chélaté avec 3 $PPh_3$ | **0,82** | **0,21** | 1 | 0,17 |
| | | P,O-chélaté seul | **0,97** | **0,30** | 0,989 | 0,29 |
| | | P,O-chélaté avec 3 $PPh_3$ | *1,63* | *0,55* | *0,951* | 0,90 |

(suite)

| Comonomère A | Comonomère B | Complexe de Ni utilisé | rA calculé* | rB calculé* | $R^2$ * | (rA)(rB) |
|---|---|---|---|---|---|---|
| **Styrène rA=0,52*** ** | **Méthacrylate de méthyle rB=0,46*** ** | N,O-chélaté seul | **0,87** | **0,45** | 0,997 | 0,39 |
| | | N,O-chélaté avec 3 $PPh_3$ | **0,79** | **0,11** | 0,980 | 0,87 |
| | | P,O-chélaté seul | **1,40** | **0,42** | 0,980 | 0,59 |
| | | P,O-chélaté avec 3 $PPh_3$ | **1,06** | **0,39** | 0,980 | 0,41 |

*calculés à partir de la méthode des moindres carrés, $R^2$: coefficient de détermination ;
** valeurs de rapports de réactivité reportées dans le Polymer Handbook pour la copolymérisation radicalaire du méthacrylate de méthyle et de l'acrylate de butyle ;
*** valeurs de rapports de réactivité reportées dans le Polymer Handbook pour la copolymérisation radicalaire du styrène et de méthacrylate de méthyle.

La copolymérisation est favorisée par l'ajout de ligand phosphine au système.

EXEMPLES 4-14

Copolymérisations d'éthylène et de monomères polaires avec deux types de complexes de nickel

Les copolymérisations sont réalisées dans un réacteur agité de 160ml. x mg de catalyseur (et la triphénylphosphine le cas échéant) sont dissous dans 50ml de monomère polaire et une pression d'éthylène est appliquée sur la solution. La température et la pression d'éthylène sont maintenues constantes pendant toute la polymérisation.
Après un temps t de réaction, la polymérisation est stoppée par refroidissement et dégazage du réacteur, le polymère étant obtenu par précipitation dans le méthanol. Après séchage, on obtient une masse m de polymère caractéristique du rendement massique (g) de la réaction.
Les exemples 4 à 9 utilisent du catalyseur de type A.

4. Copolymérisation d'éthylène et de méthacrylate de méthyle

La durée est maintenue à 120 minutes, temps pour lequel l'activité mesurée en éthylène est stable.

Tableau IV

| Essais | T °C | $P_{C2}$ bar | Durée min | Rdt g | Catalyseur + x PPh3 | Mn (Ip) g/mol |
|---|---|---|---|---|---|---|
| 1 | 50 | 27 | 120 | 4,1 | x=0 | 10 000 (3,0) |
| 2 | 50 | 100 | 120 | 6,5 | x=0 | 12 000 (3,7) |
| 3 | 50 | 150 | 60 | 6,2 | x=0 | NA |
| 4 | 50 | 250 | 120 | 6,1 | x=0 | 24 000 (4,6) |
| 5 | 50 | 27 | 120 | 3,1 | x=3 | 28100 (1,7)<br>600 (2,0) |
| 6 | 50 | 100 | 120 | 1,2 | x=3 | 37600 (1,9)<br>2000 (1,5) |
| 7 | 50 | 150 | 120 | 4,5 | x=3 | NA |
| 8 | 80 | 100 | 120 | 1,8 | x=0 | 45500 (2,6)<br>2700 (1,4) |
| 9 | 80 | 100 | 120 | 2,7 | x=9 | 32400 (1,6)<br>3400 (1,3) |

(suite)

| Essais | T °C | $P_{C2}$ bar | Durée min | Rdt g | Catalyseur + x PPh3 | Mn (Ip) g/mol |
|---|---|---|---|---|---|---|
| 10 | 50 | 100 | 120 | 1,8 | x=9 | 14400 (2,7)<br>500 (1,5) |

Tableau V : Taux d'insertion du MMA (% molaire, déterminé par RMN 1 H)

| Essais | 1 | 2 | 3 | 4 | 5 | 6 | 7 | 8 | 9 | 10 |
|---|---|---|---|---|---|---|---|---|---|---|
| %mol MMA | 20,5% | 2,7% | 0,2% | 0,3% | 34,0% | 7,7% | 4,5% | 53,3% | 87,7% | 50,1% |

Le tableau V montre les taux d'insertion molaire du MMA, calculés à partir des spectres RMN $^1$H des copolymères. On considère le MMA selon les protons du -OMe et l'éthylène selon les protons des $CH_2$ minorés des $CH_2$ et $CH_3$ ceux du MMA.

Tableau VI : propriétés thermiques des copolymères éthylène/MMA

| Essais | 1 | 2 | 3 | 4 | 5 | 6 | 7 | 8 | 9 | 10 |
|---|---|---|---|---|---|---|---|---|---|---|
| Tf °C (Tg °C) | 112,3 | 122,4 | 125,5 | 130,4 | No | (109) | (113) | (106) | (104) | No |

Le tableau VI montre les propriétés thermiques des copolymères éthylène/MMA contenant entre 66% et 95,5% molaire d'éthylène, avec peu ou pas de point de fusion, montrant ainsi l'absence d'homopolyéthylène. Le polymère contenant malgré tout de l'éthylène, nous sommes bien en présence de copolymère.
La RMN $^{13}$C permet d'identifier les signaux correspondant à l'éthylène et au MMA et permet de distinguer des signaux (à 21,9/22,6/23,5/32,8/33,5/34,8 ppm), attribués aux alternances entre les unités éthylène et MMA dans le copolymère. Ces signaux sont de faible intensité, ce qui reflète le caractère à blocs (et non alterné ou statistique) du copolymère.
La DSC montre que les longueurs de blocs polyéthylène sont insuffisantes pour conduire à un phénomène de fusion significatif.

5. Copolymérisation d'éthylène et d'acrylate de butyle

Tableau VII

| Essais | T °C | $P_{C2}$ bar | Durée min | Rendement g | Catalyseur + x $PR_3$ | %mol ABu | Mn g/mol (Ip) | Tg °C |
|---|---|---|---|---|---|---|---|---|
| 1 | 50 | 25 | 485 | 0 | x=0 | * | * | * |
| 2 | 50 | 100 | 210 | 0 | x=0 | * | * | * |
| 3 | 50 | 25 | 210 | 2,2 | x=3, R=Ph | 86,3% | 58 000 (5,2) | -49 |
| 4 | 50 | 100 | 120 | 0 | x=3, R=Ph | * | * | * |
| 5 | 75 | 110 | 210 | 0 | *x*=3, R=Ph | * | * | * |
| 6 | 50 | 100 | 240 | 1,0 | *x=9*, R=Ph | 51,3% | 158 000 (3,3) | -53 |
| 7 | 50 | 30 | 210 | 0 | x=3, R=Cy | * | * | * |
| 8 | 50 | 25 | 240 | 0 | x=9, Pyridine | * | * | * |

Ces résultats montrent qu'il n'y a pas température de fusion donc pas de séquences longues d'éthylène (et donc pas de homopolymère d'éthylène). La température de transition vitreuse Tg correspond à celle d'un PAbu (-50°C ) donc compatible avec les blocs d'acrylate de butyle d'un copolymère multiblocs.

6. Copolymérisation d'éthylène et de styrène

Tableau VIII

| Essais | T °C | $P_{C2}$ bar | Durée min | Rendement g | Catalyseur + x $PR_3$ | %mol Styrene inséré | Mn g/mol (Ip) |
|---|---|---|---|---|---|---|---|
| 1 | 50 | 25 | 180 | 1,2 | x=0 | 64,2% | 4900 (1,8) |
| 2 | 50 | 110 | 180 | 0,3 | x=0 | 16,5% | 7900 (3,2) |
| 3 | 50 | 25 | 180 | 2,2 | x=3, R=Ph | 73,3% | 3400 (2,4) |
| 4 | 50 | 100 | 180 | 1,1 | x=3, R=Ph | 42,1% | 100 000 (1,2) |
| 5* | 105 | 30 | 180 | 6,1 | x=0 | 96,9% | 25 000 (4,9) |
| 6* | 105 | 100 | 60 | 1,9 | x=0 | 90,5% | 35 000 (1,9) |

**40ml styrène+10ml toluène*

Les polymères obtenus sont amorphes (pas de point de fusion), il n'y a donc pas de séquence longue d'éthylène (et donc pas d'homopolymère d'éthylène).

7. Copolymérisation d'éthylène et d'acrvlate de méthyle

Tableau IX

| Essais | T °C | $P_{C2}$ bar | Durée min | Rendement g | Catalyseur + x $PR_3$ | %mol AMe | Mn g/mol (Ip) | Tg °C |
|---|---|---|---|---|---|---|---|---|
| 1 | 50 | 25 | 240 | 1,7 | x=0 | 15,4% | 85 000 (5,6) | 20 |
| 2 | 50 | 100 | 240 | 0,5 | x=0 | 5,9% | 92 000 (2,7) | 0 |
| 3 | 50 | 25 | 240 | 2,9 | *x*=3, R=Ph | 1,4% | NA | 20 |
| 4 | 50 | 100 | 240 | 0,3 | x=3, R=Ph | 36,2% | NA | 0 |

Les propriétés thermiques des copolymères d'éthylène et d'acrylate de méthyle indiquent que les polymères sont amorphes et les Tg observées oscillent autour de celle d'un polyacrylate de méthyle (à 10°C), donc compatible avec les blocs d'acrylate de méthyle d'un copolymère multiblocs.

8. Copolymérisation d'éthylène et de méthacrylate de butyle

Tableau X

| Essais | T °C | $P_{C2}$ bar | Durée min | Rendement g | Catalyseur + x $PR_3$ | %mol MABu | Mn g/mol (Ip) | Tf en °C |
|---|---|---|---|---|---|---|---|---|
| 1 | 50 | 25 | 240 | 3,4 | x=0 | 7,2% | 7300 (23,7) | 113 |
| 2 | 50 | 100 | 330 | 8,9 | x=0 | 0,5% | 8800(18,3) | 128 |
| 3 | 50 | 25 | 240 | 3,3 | *x*=3, R=Ph | 46,0% | 134 000 (6,5) | * |
| 4 | 50 | 100 | 240 | 5,7 | *x*=3, R=Ph | 0,8% | NA | 126 |

Les propriétés thermiques des copolymères d'éthylène et de méthacrylate de butyle indiquent que les polymères sont semi-cristallins ou amorphes. La cristallinité diminue avec le taux d'insertion de monomère polaire.

9. Terpolymérisation d'éthylène, de MMA et d'acrylate de butyle

Tableau XI

| Essais | T °C | $P_{C2}$ bar | Monomères ml | Durée min | Rendement g | Catalyseur + x $PR_3$ | %mol MMA inséré | %mol ABu inséré | Mn g/mol (Ip) |
|---|---|---|---|---|---|---|---|---|---|
| 1 | 50 | 30 | MMA/ABu 48/2 | 240 | 0,5 | x=0 | 79,6% | 0% | 94 000 (6,1) |
| 2 | 50 | 25 | MMA/ABu 40/10 | 240 | 0 | x=0 | * | * | * |
| 3 | 50 | 25 | MMA/ABu 25/25 | 240 | 0 | x=0 | * | * | * |
| 4 | 50 | 25 | MMA/ABu 40/10 | 105 | 4,1 | *x*=3, R=Ph | 41,2% | 7,1% | 64 000 (2,2) |
| 5 | 50 | 25 | MMA/ABu 25/25 | 240 | 1,6 | *x*=3, R=Ph | 37,8% | 15,9% | 241 000 (6,2) |
| 6 | 50 | 30 | MMA/ABu 15/35 | 240 | 2,6 | x=3, R=Ph | 32,6% | 28,8% | 205 000 (6,7) |

Les polymères obtenus sont amorphes (pas de point de fusion), il n'y a donc pas de séquence longue d'éthylène (et donc pas de homopolymère d'éthylène).
Les exemples suivants utilisent du catalyseur de type B.

10. <u>Copolymérisation d'éthylène et de méthacrylate de méthyle</u>

Tableau XII

| Essais | [Ni] en mM | $P_{C2}$ bar | Durée min | Rdt g | Catalyser + x PPh3 | %mol MMA | Mn (Ip) g/mol | Tf °C |
|---|---|---|---|---|---|---|---|---|
| 1 | 0,5 | 30 | 60 | 1,3 | x=0 | 0,9% | 370 (1,3) | * |
| 2 | 1,3 | 100 | 30 | 10,0 | x=0 | 0,3% | 650 (1,2) | 110,8 |
| 3 | 0,5 | 100 | 60 | 4,1 | x=0 | 0,6% | 970 (1,3) | NA |
| 4 | 0,6 | 28 | 60 | 0,7 | x=3 R=Ph | 42,2% | 426 000 (2,2) | * |
| 5 | 0,5 | 100 | 60 | 2,5 | x=3 R=Ph | 1,0% | 550 (1,1) | * |

Les propriétés thermiques des copolymères d'éthylène et de méthacrylate de méthyle indiquent que les polymères sont semi-cristallins ou amorphes. La cristallinité diminue avec le taux d'insertion de monomère polaire.

11. <u>Copolymérisation d'éthylène et d'acrylate de butyle</u>

Tableau XIII

| Essais | [Ni] en mM | $P_{C2}$ bar | Durée min | Rendement g | Catalyseur + x $PR_3$ | %mol ABu | Mn (Ip) g/mol |
|---|---|---|---|---|---|---|---|
| 1 | 2,6 | 25 | 120 | 0 | x=0 | * | * |
| 2 | 2,6 | 109 | 120 | 0 | x=0 | * | * |
| 3 | 0,6 | 28 | 120 | 0 | x=3 R=Ph | * | * |

(suite)

| Essais | [Ni] en mM | $P_{C2}$ bar | Durée min | Rendement g | Catalyseur + x $PR_3$ | %mol ABu | Mn (Ip) g/mol |
|---|---|---|---|---|---|---|---|
| 4 | 1,3 | 28 | 120 | 0,4 | x=3 R=Ph | NA | 406000 (8.2) |
| 5 | 2,6 | 25 | 120 | 1,0 | x=3 R=Ph | 80,9% | 38 000 (6,4) |
| 6 | 2,6 | 115 | 120 | 0,8 | x=9 R=Ph | 66,0% | NA |

Les polymères obtenus sont amorphes (pas de point de fusion), il n'y a donc pas de séquence longue d'éthylène (et donc pas de homopolymère d'éthylène).

12. Copolymérisation d'éthylène et de styrène

Tableau XIV

| Essais | [Ni] en mM | $P_{C2}$ bar | Durée min | Rendement G | Catalyseur + x $PR_3$ | %mol Styrène | Mn (Ip) g/mol |
|---|---|---|---|---|---|---|---|
| 1 | 0,5 | 28 | 120 | 3,8 | x=0 | 7,6% | NA |
| 2 | 0,5 | 100 | 40 | 11,7 | x=0 | 0% | 340 (2,2) |
| 3 | | 30 | 120 | 1,1 | x=3 R=Ph | 49,8% | 16 000 (3,4) |
| 4 | 0,6 | 100 | 120 | 1,7 | x=3 R=Ph | 0% | NA |

Les polymères obtenus sont amorphes (pas de point de fusion), il n'y a donc pas de séquence longue d'éthylène (et donc pas de homopolymère d'éthylène).

## Revendications

**1.** Procédé de préparation de copolymères à blocs à partir d'au moins un monomère apolaire notamment l'éthylène et d'au moins un monomère polaire, la copolymérisation étant effectuée en présence d'un système catalytique formé d'un complexe organométallique de formule :

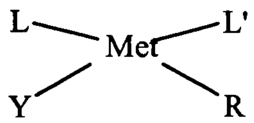

où:

a. Met représente un métal appartenant aux groupes VIII, IX et X,
b. Y représente une molécule de ligand oxydant le métal et formée de groupements hétéroatomiques à base de C, H et au moins un atome sélectionné parmi : O, S, P, N, et de préférence de type phénoxy,
c. L représente une molécule complexante formée de groupements hétéroatomiques à base de C, H et au moins un atome sélectionné parmi : O, S, P, N, et de préférence de type imine ou ylure,
d. L' représente une molécule complexante électrodonneuse et monodentate, telle qu'une phosphine, de la pyridine, préférentiellement une phosphine, et encore plus préférentiellement de la triphénylphosphine,
e. R est un groupement hydrocarboné de type alkyle ou alkylaryle ayant de 1 à 20 atomes de C, ou de type cycloalkyle ou phényle ayant de 6 à 20 atomes de C, préférentiellement un groupement méthyle ou phényle sans ajout de cocatalyseur, le dit procédé conduisant à la formation d'un copolymère à blocs qui satisfait aux relations suivantes :

$$\Sigma p\text{-}a/\Sigma p\text{-}p \ll 1$$

$$\Sigma p\text{-}a/\Sigma a\text{-}a<<1$$

$\Sigma$p-a>1 (dans chaque chaîne de polymère), dans lesquelles : « p-a » représente une liaison entre un monomère polaire (p) et un monomère apolaire (a) ; « p-p » représente une liaison entre deux monomères polaires ; « a-a » représente une liaison entre deux monomères apolaires.

2. Procédé selon la revendication 1 dans lequel le métal est choisi dans le groupe : fer, cobalt, nickel, palladium et platine.

3. Procédé selon l'une des revendications 1 et 2 dans lequel Y et L sont liés par une liaison covalente.

4. Procédé selon l'une quelconque des revendications 1 à 3 dans lequel le monomère polaire est sélectionné dans le groupe : les acides carboxyliques insaturés tels que l'acide acrylique, l'acide méthacrylique et leurs dérivés ; les esters d'acides carboxyliques insaturés tels que l'acrylate de butyle et le méthacrylate de méthyle ; les dérivés styréniques tels que le styrène ou l'$\alpha$-méthylstyrène considérés comme monomère polaire lorsqu'associés à une $\alpha$ -oléfine, l'éthylène ou le propylène; les acrylamides et méthacrylamides tels que l'acrylamide, le méthacrylamide et leur dérivés ; l'acrylonitrile et ses dérivés ; et de préférence est l'acrylate de méthyle, le méthacrylate de méthyle, le méthacrylate de butyle, le styrène ou l'acrylate de butyle.

5. Procédé selon l'une quelconque des revendications 2 à 4 dans lequel le complexe organométallique est un complexe de nickel.

6. Procédé selon la revendication 5 dans lequel le complexe organométallique est un complexe salicylaldimine ayant la structure suivante :

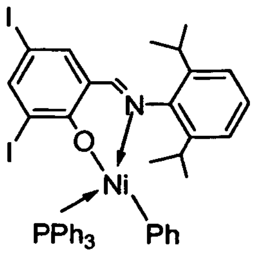

7. Procédé selon la revendication 5 dans lequel le complexe organométallique est un complexe phosphino-énolate ayant la structure suivante :

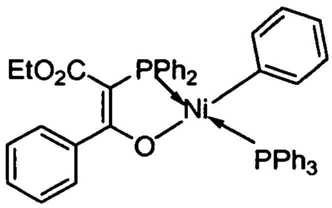

8. Procédé selon l'une quelconque des revendications 1 à 7 dans lequel, lorsque la polymérisation a lieu en solution, les monomères apolaires, à l'état liquide ou gazeux, réagissent avec les monomères polaires à l'état liquide, en présence du complexe organométallique, dans un solvant hydrocarboné inerte.

9. Procédé selon l'une quelconque des revendications 1 à 7 dans lequel, lorsque la polymérisation a lieu en masse, les monomères apolaires, à l'état liquide ou gazeux, réagissent avec les monomères polaires à l'état liquide, en présence du complexe organométallique.

10. Procédé selon l'une quelconque des revendications précédentes dans lequel la polymérisation est effectuée entre -100°C et 250°C, préférentiellement entre 20°C et 250°C et sous une pression comprise entre la pression atmosphérique et 300 bar.

**11.** Procédé selon l'une quelconque des revendications précédentes dans lequel la masse moléculaire moyenne en nombre du copolymère à blocs obtenu est de $10^3$ et $10^6$g/mol.

**12.** Procédé selon l'une quelconque des revendications précédentes comprenant une étape d'ajout d'une base de Lewis, de préférence la triphénylphosphine, au milieu de réaction.

**13.** Copolymères à blocs susceptibles d'être obtenus par le procédé selon l'une quelconque des revendications 1 à 12 comprenant un ou plusieurs blocs de monomère polaire et un ou plusieurs blocs de monomère apolaire notamment d'éthylène.

**14.** Copolymères à blocs selon la revendication 13 dans lesquels le monomère polaire est sélectionné dans le groupe : acrylate de méthyle, méthacrylate de méthyle, acrylate de butyle, méthacrylate de butyle, styrène.

**15.** Copolymères à blocs selon l'une des revendications 13 et 14 dans lesquels les taux molaires de chacun des comonomères varient de 0,1% à 99,9%.

**16.** Utilisation d'un système catalytique formé d'un complexe organométallique de formule :

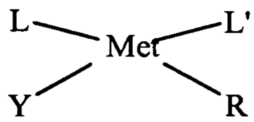

où:

a. Met représente un métal appartenant aux groupes VIII, IX et X,
b. Y représente une molécule de ligand oxydant le métal et formée de groupements hétéroatomiques à base de C, H et au moins un atome sélectionné parmi : O, S, P, N, et de préférence de groupes phénoxy,
c. L représente une molécule complexante formée de groupements hétéroatomiques à base de C, H et au moins un atome sélectionné parmi : O, S, P, N, et de préférence de type imine ou ylure,
d. L' représente une molécule complexante électrodonneuse et monodentate, telle qu'une phosphine, de la pyridine, préférentiellement une phosphine, et encore plus préférentiellement de la triphénylphosphine,
e. R est un groupement hydrocarboné de type alkyle ou alkylaryle ayant de 1 à 20 atomes de C, ou de type cycloalkyle ou phényle ayant de 6 à 20 atomes de C, préférentiellement un groupement méthyle ou phényle, pour la copolymérisation à blocs d'au moins un monomère apolaire notamment l'éthylène et d'au moins un monomère polaire sans ajout de cocatalyseur qui satisfait aux relations suivantes :

$$\Sigma p\text{-}a/\Sigma p\text{-}p \ll 1$$

$$\Sigma p\text{-}a/\Sigma a\text{-}a \ll 1$$

$\sum p\text{-}a > 1$ (dans chaque chaîne de polymère), dans lesquelles : « p-a » représente une liaison entre un monomère polaire (p) et un monomère apolaire (a) ; « p-p » représente une liaison entre deux monomères polaires ; « a-a » représente une liaison entre deux monomères apolaires.

**17.** Utilisation selon la revendication 16 dans laquelle le complexe organométallique est un complexe salicylaldimine ayant la structure suivante :

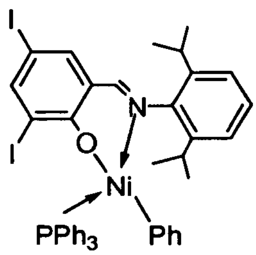

**18.** Utilisation selon la revendication 16 dans laquelle le complexe organométallique est un complexe phosphino-énolate ayant la structure suivante :

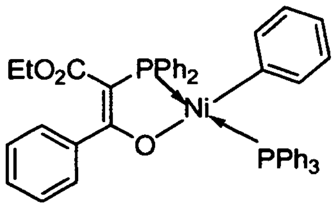

**Patentansprüche**

**1.** Verfahren zur Herstellung von Blockcopolymeren aus mindestens einem apolaren Monomer, insbesondere Ethylen, und mindestens einem polaren Monomer, wobei die Copolymerisation in Gegenwart eines Katalysatorsystems aus einem metallorganischen Komplex der Formel:

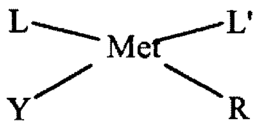

wobei:

a. Met für ein Metall der Gruppen VIII, IX und X steht,
b. Y für ein das Metall oxidierendes Ligandenmolekül steht und aus Heteroatomgruppen auf Basis von C, H und mindestens einem aus 0, S, P und N ausgewählten Atom und vorzugsweise vom Phenoxy-Typ besteht,
c. L für ein komplexierendes Molekül aus Heteroatomgruppen auf Basis von C, H und mindestens einem aus 0, S, P und N ausgewählten Atom und vorzugsweise vom Imin- oder Ylid-Typ steht,
d. L' für ein einzähniges elektronenspendendes komplexierendes Molekül wie ein Phosphin oder Pyridin, vorzugsweise ein Phosphin und noch weiter bevorzugt Triphenylphosphin, steht,
e. R für eine Kohlenwasserstoffgruppe vom Alkyl-oder Alkylaryl-Typ mit 1 bis 20 C-Atomen oder vom Cycloalkyl- oder Phenyl-Typ mit 6 bis 20 C-Atomen, vorzugsweise eine Methyl- oder Phenylgruppe, steht, ohne Zugabe von Cokatalysator durchgeführt wird, wobei das Verfahren zur Bildung eines Blockcopolymers führt, das die folgenden Beziehungen erfüllt:

$$\Sigma p-a/\Sigma p-p<<1$$

$$\Sigma p-a/\Sigma a-a<<1$$

$\sum$p-a>1 (in jeder Polymerkette) worin: "p-a" für eine Bindung zwischen einem polaren Monomer (p) und einem apolaren Monomer (a) steht; "p-p" für eine Bindung zwischen zwei polaren Monomeren steht; "a-a" für eine Bindung zwischen zwei apolaren Monomeren steht.

2. Verfahren nach Anspruch 1, bei dem das Metall aus der Gruppe Eisen, Cobalt, Nickel, Palladium und Platin ausgewählt ist.

3. Verfahren nach einem der Ansprüche 1 und 2, bei dem Y und L über eine kovalente Bindung verknüpft sind.

4. Verfahren nach einem der Ansprüche 1 bis 3, bei dem das polare Monomer aus der Gruppe der ungesättigten Carbonsäuren wie Acrylsäure, Methacrylsäure und Derivaten davon; der ungesättigten Carbonsäureester wie Butylacrylat und Methylmethacrylat; der Styrolderivate wie Styrol oder $\alpha$-Methylstyrol, die bei Kombination mit einem $\alpha$-Olefin, Ethylen oder Propylen als polares Monomer betrachtet werden; den Acrylamiden und Methacrylamiden wie Acrylamid, Methacrylamid und Derivaten davon; Acrylnitril und Derivaten davon ausgewählt wird und vorzugsweise Methylacrylat, Methylmethacrylat, Butylmethacrylat, Styrol oder Butylacrylat ist.

5. Verfahren nach einem der Ansprüche 2 bis 4, bei dem es sich bei dem metallorganischen Komplex um einen Nickelkomplexe handelt.

6. Verfahren nach Anspruch 5, bei dem es sich bei dem metallorganischen Komplex um einen Salicylaldimin-Komplex der folgenden Struktur handelt:

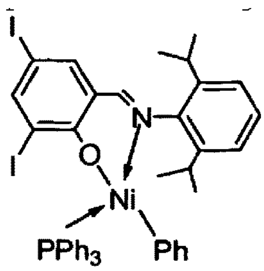

7. Verfahren nach Anspruch 5, bei dem es sich bei dem metallorganischen Komplex um einen Phosphino-Enolat-Komplex der folgenden Struktur handelt:

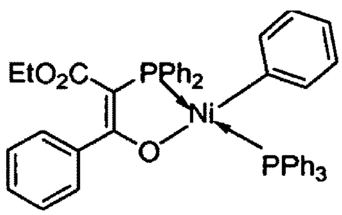

8. Verfahren nach einem der Ansprüche 1 bis 7, bei dem bei Durchführung der Polymerisation in Lösung die apolaren Monomere in flüssigem oder gasförmigem Zustand in Gegenwart des metallorganischen Komplexes in einem inerten Kohlenwasserstofflösungsmittel mit den polaren Monomeren in flüssigem Zustand reagieren.

9. Verfahren nach einem der Ansprüche 1 bis 7, bei dem bei Durchführung der Polymerisation in Masse die apolaren Monomere in flüssigem oder gasförmigem Zustand in Gegenwart des metallorganischen Komplexes mit den polaren Monomeren in flüssigem Zustand reagieren.

10. Verfahren nach einem der vorhergehenden Ansprüche, bei dem man die Polymerisation zwischen -100°C und 250°C, vorzugsweise zwischen 20°C und 250°C, und unter einem Druck zwischen Normaldruck und 300 bar durchführt.

11. Verfahren nach einem der vorhergehenden Ansprüche, bei dem das zahlenmittlere Molekulargewicht des erhaltenen Blockcopolymers $10^3$ bis $10^6$ g/mol beträgt.

12. Verfahren nach einem der vorhergehenden Ansprüche, umfassend einen Schritt der Zugabe einer LewisBase, vorzugsweise von Triphenylphosphin, zum Reaktionsmedium.

13. Blockcopolymere, die durch das Verfahren nach einem der Ansprüche 1 bis 12 erhältlich sind, umfassend einen

oder mehrere Blöcke aus polarem Monomer und einen oder mehrere Blöcke aus apolarem Monomer, insbesondere Ethylen.

**14.** Blockcopolymere nach Anspruch 13, wobei das polare Monomer aus der Gruppe Methylacrylat, Methylmethacrylat, Butylacrylat, Butylmethacrylat und Styrol ausgewählt ist.

**15.** Blockcopolymere nach einem der Ansprüche 13 und 14, wobei die molaren Gehalte jedes der Comonomere von 0,1% bis 99,9% variieren.

**16.** Verwendung eines Katalysatorsystems aus einem metallorganischen Komplex der Formel:

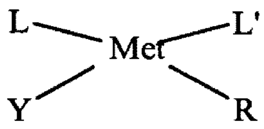

wobei:

a. Met für ein Metall der Gruppen VIII, IX und X steht,
b. Y für ein das Metall oxidierendes Ligandenmolekül steht und aus Heteroatomgruppen auf Basis von C, H und mindestens einem aus 0, S, P und N ausgewählten Atom und vorzugsweise vom Phenoxy-Typ besteht,
c. L für ein komplexierendes Molekül aus Heteroatomgruppen auf Basis von C, H und mindestens einem aus 0, S, P und N ausgewählten Atom und vorzugsweise vom Imin- oder Ylid-Typ steht,
d. L' für ein einzähniges elektronenspendendes komplexierendes Molekül wie ein Phosphin oder Pyridin, vorzugsweise ein Phosphin und noch weiter bevorzugt Triphenylphosphin, steht,
e. R für eine Kohlenwasserstoffgruppe vom Alkyl-oder Alkylaryl-Typ mit 1 bis 20 C-Atomen oder vom Cycloalkyl- oder Phenyl-Typ mit 6 bis 20 C-Atomen, vorzugsweise eine Methyl- oder Phenylgruppe, steht,

zur Blockcopolymerisation von mindestens einem apolaren Monomer, insbesondere Ethylen, und mindestens einem polaren Monomer ohne Zugabe von Cokatalysator, die die folgenden Beziehungen erfüllt:

$$\Sigma p-a/\Sigma p-p<<1$$

$$\Sigma p-a/\Sigma a-a<<1$$

$\Sigma p-a>1$ (in jeder Polymerkette) worin: "p-a" für eine Bindung zwischen einem polaren Monomer (p) und einem apolaren Monomer (a) steht; "p-p" für eine Bindung zwischen zwei polaren Monomeren steht; "a-a" für eine Bindung zwischen zwei apolaren Monomeren steht.

**17.** Verwendung nach Anspruch 16, wobei es sich bei dem metallorganischen Komplex um einen Salicylaldimin-Komplex der folgenden Struktur handelt:

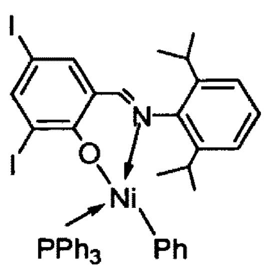

**18.** Verwendung nach Anspruch 16, wobei es sich bei dem metallorganischen Komplex um einen Phosphino-Enolat-Komplex der folgenden Struktur handelt:

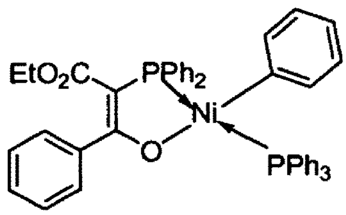

## Claims

1. Method for preparing block copolymers from at least one non-polar monomer, in particular ethylene, and at least one polar monomer, the copolymerization being carried out in the presence of a catalytic system made up of an organometallic complex of formula:

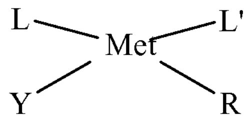

where:

a. Met represents a metal belonging to groups VIII, IX and X,
b. Y represents a ligand molecule oxidizing the metal and made up of heteroatomic groups based on C, H and at least one atom selected from: 0, S, P and N, and preferably of phenoxy type,
c. L represents a complexing molecule made up of heteroatomic groups based on C, H and at least one atom selected from: 0, S, P and N, and preferably of imine or ylide type,
d. L' represents a monodentate, electrondonating, complexing molecule, such as a phosphine or pyridine, preferably a phosphine, and even more preferably triphenylphosphine,
e. R is a hydrocarbon-based group of alkyl or alkylaryl type containing from 1 to 20 C atoms, or of cycloalkyl or phenyl type containing from 6 to 20 C atoms, preferably a methyl or phenyl group, without adding a cocatalyst, said method resulting in the formation of a block copolymer which satisfies the following relationships:

$$\Sigma p\text{-}a/\Sigma p\text{-}p \ll 1$$

$$\Sigma p\text{-}a/\Sigma a\text{-}a \ll 1$$

$\Sigma p\text{-}a > 1$ (in each polymer chain),

in which: "p-a" represents a bond between a polar monomer (p) and a non-polar monomer (a); "p-p" represents a bond between two polar monomers; "a-a" represents a bond between two non-polar monomers.

2. Method according to Claim 1, in which the metal is chosen from the group: iron, cobalt, nickel, palladium and platinum.

3. Method according to either of Claims 1 and 2, in which Y and L are linked by a covalent bond.

4. Method according to any one of Claims 1 to 3, in which the polar monomer is selected from the group: unsaturated carboxylic acids, such as acrylic acid or methacrylic acid, and derivatives thereof; unsaturated carboxylic acid esters, such as butyl acrylate and methyl methacrylate; styrene derivatives, such as styrene or $\alpha$-methylstyrene, considered to be a polar monomer when combined with an $\alpha$-olefin, ethylene or propylene; acrylamides and methacrylamides, such as acrylamide and methacrylamide, and derivatives thereof; acrylonitrile and derivatives thereof; and is preferably methyl acrylate, methyl methacrylate, butyl methacrylate, styrene or butyl acrylate.

5. Method according to any one of Claims 2 to 4, in which the organometallic complex is a nickel complex.

6. Method according to Claim 5, in which the organometallic complex is a salicylaldimine complex having the following structure:

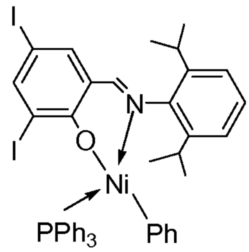

7. Method according to Claim 5, in which the organometallic complex is a phosphinoenolate complex having the following structure:

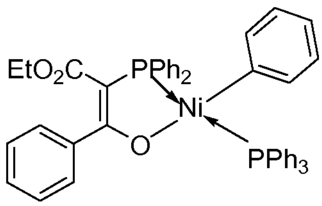

8. Method according to any one of Claims 1 to 7, in which, when the polymerization is carried out in solution, the non-polar monomers, in the liquid or gaseous state, react with the polar monomers in the liquid state, in the presence of the organometallic complex, in an inert hydrocarbon-based solvent.

9. Method according to any one of Claims 1 to 7, in which, when the polymerization is carried out in bulk, the non-polar monomers, in the liquid or gaseous state, react with the polar monomers in the liquid state, in the presence of the organometallic complex.

10. Method according to any one of the preceding claims, in which the polymerization is carried out at between -100°C and 250°C, preferably between 20°C and 250°C, and at a pressure of between atmospheric pressure and 300 bar.

11. Method according to any one of the preceding claims, in which the number-average molecular mass of the block copolymer obtained is from $10^3$ to $10^6$g/mol.

12. Method according to any one of the preceding claims, comprising a step of adding a Lewis base, preferably triphenylphosphine, to the reaction medium.

13. Block copolymers which can be obtained by means of the method according to any one of Claims 1 to 12, comprising one or more polar monomer blocks and one or more non-polar monomer blocks, in particular ethylene blocks.

14. Block copolymers according to Claim 13, in which the polar monomer is selected from the group: methyl acrylate, methyl methacrylate, butyl acrylate, butyl methacrylate and styrene.

15. Block copolymers according to either of Claims 13 and 14, in which the molar contents of each of the comonomers range from 0.1% to 99.9%.

16. Use of a catalytic system made up of an organometallic complex of formula:

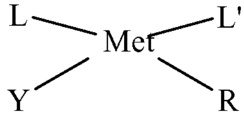

where:

a. Met represents a metal belonging to groups VIII, IX and X,
b. Y represents a ligand molecule oxidizing the metal and made up of heteroatomic groups based on C, H and at least one atom selected from: 0, S, P and N, and preferably of phenoxy groups,
c. L represents a complexing molecule made up of heteroatomic groups based on C, H and at least one atom selected from: 0, S, P and N, and preferably of imine or ylide type,
d. L' represents a monodentate, electron-donating, complexing molecule, such as a phosphine or pyridine, preferably a phosphine, and even more preferably triphenylphosphine,
e. R is a hydrocarbon-based group of alkyl or alkylaryl type containing from 1 to 20 C atoms, or of cycloalkyl or phenyl type containing from 6 to 20 C atoms, preferably a methyl or phenyl group,

for the block copolymerization of at least one non-polar monomer, in particular ethylene, and of at least one polar monomer, without adding a cocatalyst, which satisfies the following relationships:

$$\Sigma p\text{-}a/\Sigma p\text{-}p<<1$$
$$\Sigma p\text{-}a/\Sigma a\text{-}a<<1$$

$\Sigma$p-a>1 (in each polymer chain),
in which: "p-a" represents a bond between a polar monomer (p) and a non-polar monomer (a); "p-p" represents a bond between two polar monomers; "a-a" represents a bond between two non-polar monomers.

**17.** Use according to Claim 16, in which the organometallic complex is a salicylaldimine complex having the following structure:

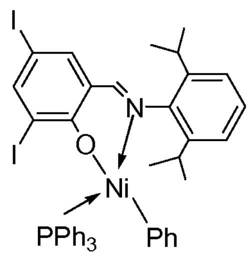

**18.** Use according to Claim 16, in which the organometallic complex is a phosphinoenolate complex having the following structure:

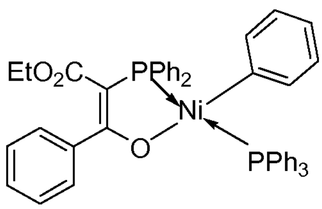

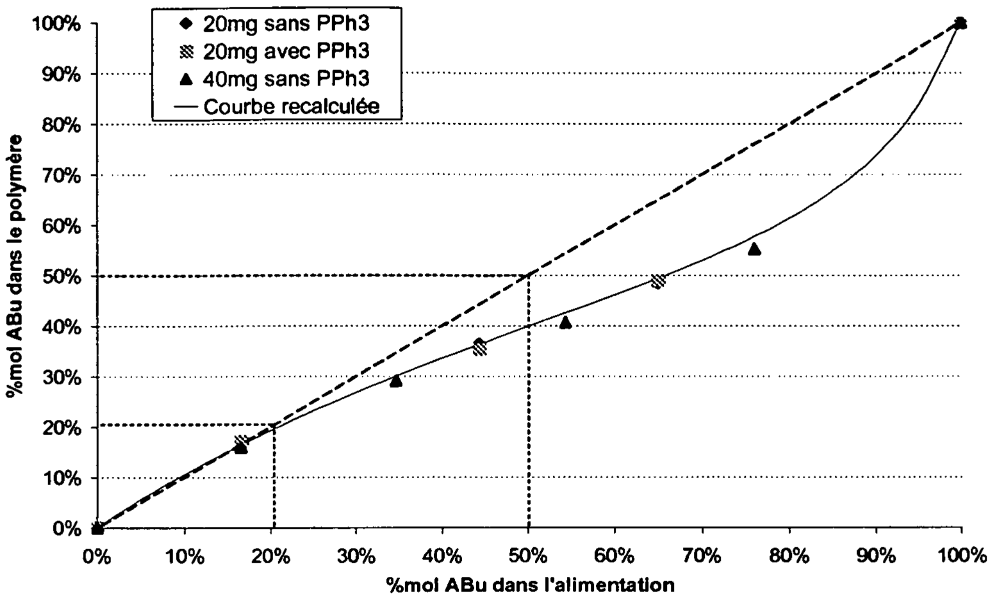

◆ 20mg sans PPh3
20mg avec PPh3
▲ 40mg sans PPh3
— Courbe recalculée
100%
90%
80%
70%
60%
50%
40%
30%
20%
10%
0%
%mol ABu dans le polymère
0%
10%
20%
30%
40%
50%
60%
70%
80%
90%
100%
%mol ABu dans l'alimentation


FIG 1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- US 6417303 B
- US 6479425 B
- WO 0192348 A
- WO 0192354 A
- WO 02059165 A
- WO 9623010 A
- WO 9842664 A
- WO 2004101634 A
- US 6777510 B
- WO 0192342 A


### Littérature non-brevet citée dans la description


- **MARQUES M.M. et al.** *Journal of Polymer Science: Part A: Polymer Chemistry,* 1999, vol. 37, 2457-2469
- **AALTONEN P. et al.** *Macromolecules,* 1996, vol. 29, 5255-5260
- **CARLINI C. et al.** *Macromol. Chem. Phys.,* 2002, vol. 203, 1606-1613
- **PRACELLA M. et al.** *Journal of Polymer Science: Part A: Polymer Chemistry,* 2007, vol. 45, 1134-1142
- **MECKING S.** *Coordination Chemistry Reviews,* 2000, vol. 203, 325-35
- **JOHNSON L.K et al.** *Chemical Reviews,* 2000, vol. 100, 1169-1203
- **BOFFA L.S. ; NOVAK B.M.** *Chem. Rev.,* 2000, vol. 100, 1479-1493
- **LIU S. et al.** *Organometallics,* 2007, vol. 26, 210-216
- **SKUPOV K.M. et al.** *Macromol. Rapid Commun.,* 2007, vol. 28, 2033-2038
- **NAGEL M. et al.** *Macromolecules,* 2005, vol. 38, 7262-7265
- **LIU S.S. ; SEN A.M.** *Journal of Polymer Science: Part A: Polymer Chemistry,* 2004, vol. 42, 6175-6192
- **VENKATESH R. ; KLUMPERMANN B.** *Macromolecules,* 2004, vol. 37, 1226-1233
- **TIAN G. et al.** *Macromolecules,* 2001, vol. 34, 7656-7663
- **GRUBBS.** *Organometallics,* 1998, vol. 17, 3149
- **MATT.** *Chemistry--A European Journal,* 2006, vol. 12 (20), 5210-5219